# EUROPEAN PATENT APPLICATION

(11) **EP 4 517 065 A1**
(43) Date of publication of application: **05.03.2025**
(21) Application number: 24189314.8
(22) Date of filing: 18.07.2024
(51) Int. Cl.: F02C 3/22, F02C 7/224, F02C 9/40

(54) **GAS TURBINE ENGINE FUEL SYSTEM**

(30) Priority: 18.08.2023 GB 202312643
(71) Applicant: Rolls-Royce plc, London N1 9FX (GB)
(72) Inventor: Coulson, James, Derby, DE24 8BJ (GB); Wright, Adrian, Derby, DE24 8BJ (GB)
(74) Representative: Rolls-Royce plc

(57) **Abstract**

A fuel system for a hydrogen fuelled gas turbine engine (103) includes a main hydrogen fuel storage unit (104), a hydrogen fuel pump (212) configured to be supplied with hydrogen from the hydrogen storage unit (104), a hydrogen fuel preheater (220, 224) configured to be supplied with high pressure hydrogen from the hydrogen fuel pump (212), and configured to supply heated gaseous hydrogen to a combustor (206) of the gas turbine engine, and a hydrogen priming tank (232) configured to store compressed gaseous hydrogen and to deliver gaseous hydrogen to at least the hydrogen fuel pump (212) and preheater (220, 224). The fuel system comprises a high-pressure gaseous hydrogen fuel offtake (238) downstream in hydrogen fuel flow of the fuel pump (212) in fluid communication with the hydrogen priming tank (232), and configured to fill the hydrogen priming tank (232) with high pressure gaseous hydrogen

## Description

### TECHNICAL FIELD

This disclosure relates to a fuel system for a hydrogen fuelled aircraft gas turbine engine, and a method of operating such a fuel system.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, as either a compressed gas, a supercritical fluid, or a liquid.

One challenge of operating such gas turbine engines is engine starting. The engine fuel system must be primed with liquid hydrogen to enable engine starting. However, several problems arise when flowing liquid hydrogen into the fuel system. Firstly, the cold liquid hydrogen will vaporize when it contacts the warm fuel system components, which may cause overpressure. Secondly, any water present in the system will freeze, and gases such as air may liquify which may cause potential blockages. Thirdly, any oxygen present in the system where hydrogen is present represents a fire risk.

As such, a purging and priming procedure may be necessary prior to flowing liquid hydrogen through the fuel system. Such a procedure may require the use of purging and priming gases, which need to be recharged between each flight, thereby further increasing the complexity of fuelling operations between flights. The present disclosure seeks to provide an improved fuel system and method of operation which addresses these problems.

### SUMMARY

In a first aspect there is provided a fuel system for a hydrogen fuelled gas turbine engine comprising:
a main hydrogen fuel storage unit;
a hydrogen fuel pump configured to be supplied with hydrogen from the main hydrogen storage unit;
a hydrogen fuel preheater configured to be supplied with high pressure hydrogen from the hydrogen fuel pump, and configured to supply heated gaseous hydrogen to a combustor of the gas turbine engine;
a hydrogen priming tank, separate from the main hydrogen storage unit, configured to store compressed gaseous hydrogen and to deliver gaseous hydrogen to at least the hydrogen fuel pump and preheater; wherein
the fuel system comprises a high-pressure gaseous hydrogen fuel offtake downstream in hydrogen fuel flow of the fuel pump in fluid communication with the hydrogen priming tank, and configured to fill the hydrogen priming tank with hydrogen.

Advantageously, the hydrogen priming gas tank can be filled with hydrogen by operation of the fuel pump during engine operation, thereby avoiding a requirement to separately fill the hydrogen priming tank between flights.

The fuel system may comprise a hydrogen priming gas tank refill valve configured to selectively open to allow filling of the hydrogen priming gas tank.

The offtake may be provided downstream in hydrogen fuel flow of the preheater. Advantageously, the hydrogen priming tank is supplied with warm, gaseous hydrogen. Consequently, the hydrogen priming tank can be allowed to be maintained at ambient pressure, without the tank being over-pressurised as the hydrogen heats up in the tank over time.

The pre-heater may comprise an auxiliary combustor configured to combust a portion of hydrogen fuel with air to produce a heated exhaust flow.

Alternatively or additionally, the preheater may comprise a recuperator configured to exchange heat between gas turbine engine exhaust gases and hydrogen fuel.

The hydrogen storage tank may be configured to store hydrogen at an above-ambient pressure, and may be configured to store hydrogen at a pressure between 1 and 4 Bar.

The hydrogen storage tank may be configured to store liquid hydrogen.

The hydrogen priming gas tank may be configured to store gaseous hydrogen at a maximum pressure of between 10 Bar and 100 Bar.

The hydrogen fuel pump may be configured to deliver hydrogen at a maximum pressure of between 15 Bar and 100 Bar. Advantageously, the hydrogen fuel pump is capable of delivering hydrogen fuel to the hydrogen priming gas tank at a pressure sufficient to enable efficient storage of gaseous hydrogen.

In a second aspect, there is provided a method of operating a hydrogen fuelled gas turbine engine fuel system in accordance with the first aspect comprising, during engine running, filling the hydrogen priming tank with gaseous hydrogen from an offtake downstream in hydrogen fuel flow of the hydrogen fuel pump.

In a third aspect there is provided an aircraft comprising a fuel system in accordance with the first aspect.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled airliner comprising a propulsion system comprising hydrogen-fuelled turbofan engines; and
Figure 2 is a block diagram of a fuel system of the propulsion system of the aircraft of figure 1.

### DETAILED DESCRIPTION

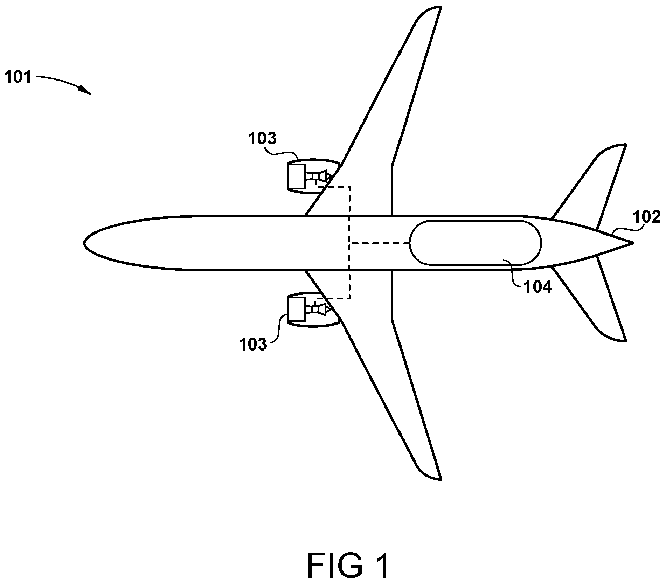

A hydrogen-fuelled airliner is illustrated in Figure 1. In this example, the airliner 101 is of substantially conventional tube-and-wing twinjet configuration with a central fuselage 102 and a propulsion system comprising substantially identical underwing-mounted turbofan engines 103.

A main hydrogen storage tank 104 is located in the fuselage 102. The hydrogen storage tank 104 is a cryogenic hydrogen storage tank and thus stores the hydrogen fuel in a liquid state, in a specific example at 22 Kelvin. In this example, the hydrogen fuel is pressurised to a pressure from around 1 bar to around 4 bar, in a specific example 4 bar. As will be appreciated, storing the hydrogen fuel at a higher pressure would necessitate heavier tanks to contain the pressure, and increase the risk of leaks. On the other hand, a lower pressure would increase the boiling point of the hydrogen, requiring a lower temperature in the tank, and would risk cavitation in downstream hydrogen plumbing. In other examples, the main hydrogen storage tank may be configured to store the hydrogen in a gaseous or supercritical state, at low cryogenic temperatures and high pressures. In either case, the main hydrogen storage tank 104 typically comprises insulation to prevent heat from leaking into the tank, which would cause increased pressure in the tank, and may require venting. The relatively large volume and mass of hydrogen stored within the tank also ensures stability.

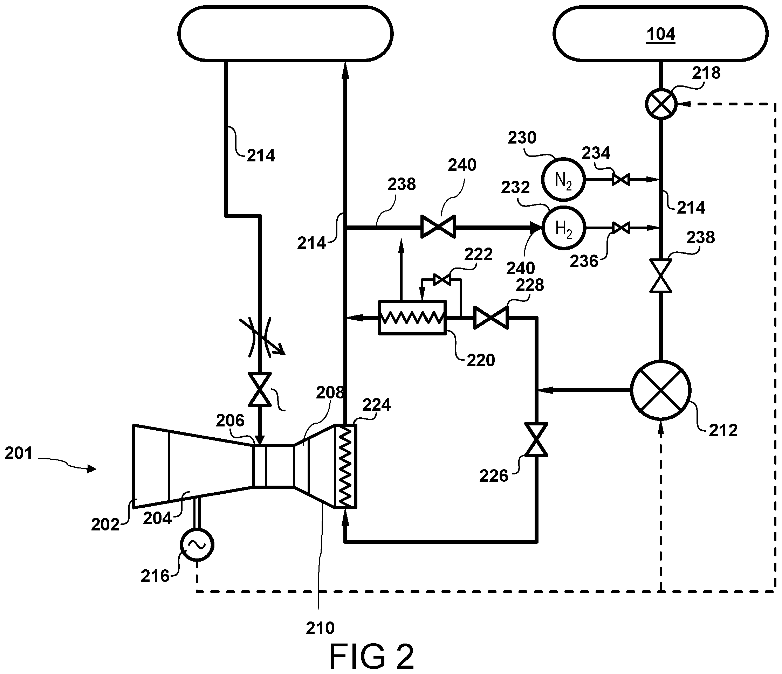

A block diagram of one of the propulsion systems comprising one of the engines 103 is shown in Figure 2.

The turbofan engine 103 comprises a core gas turbine 201.

The core gas turbine 201 comprises, in fluid flow series, separate low and high-pressure compressors 202, 204, a core combustor 206 and a turbine system comprising high and low-pressure turbines 208, 210 The low-pressure compressor 202 is driven by the low-pressure turbine 210 via a low-pressure shaft (not shown) and the high-pressure compressor 204 is driven by the high-pressure turbine 208 via a high-pressure shaft (not shown). A fan (not shown) is typically provided to provide propulsive thrust in addition to that generated by the engine core. It will be appreciated that in alternative embodiments, the core gas turbine could be of three-shaft configuration, and / or could comprise a reduction gearbox between the turbine and fan.

In operation, hydrogen fuel is pumped from the hydrogen storage tank 104 by a main, high-pressure hydrogen fuel pump 212 and into a main fuel conduit 214 which ultimately delivers fuel to the core combustor 203. In the present embodiment, the pump 212 is driven by an electric machine driven by a main engine provided with electrical power from a main engine driven electrical generator 216. In other embodiments, the pump 205 may be driven by one or more of the gas turbine engine core shafts via an auxiliary gearbox (not shown). In some cases, a low-pressure pump 218 may also be provided, upstream of the high-pressure pump 205, and may be provided within the liquid hydrogen tank 104.

The high-pressure hydrogen fuel pump 212 is typically configured to pump liquid hydrogen, rather than primarily to pump gaseous or supercritical hydrogen. As such, the fluid within the pump 212 is substantially incompressible during operation. Suitable pumps include positive displacement pumps (such as piston pumps) or variable displacement pumps such as a centrifugal or axial flow pumps. In the present embodiment, the pump 205 comprises a centrifugal flow pump.

As will be appreciated, it is desirable to increase the temperature of the fuel from the 22 Kelvin cryogenic storage condition to a temperature much closer to the firing temperature of the core gas turbine 201; of course this is subject to the constraint of not exceeding the autoignition temperature of the hydrogen fuel prior to admission into the combustor 206. In an example, the injection temperature is from 250 to 300 kelvin, for example 250 kelvin. In some cases, it may be desirable to increase the fuel temperature to above an icing temperature, such as 273 Kelvin.

In the present embodiment, a pre-heater in the form of an auxiliary combustor 220 is therefore provided for heating of the hydrogen fuel, and possibly to implement a phase change. In the present embodiment, this takes place between the high-pressure fuel pump and the core combustor 206. In an embodiment, the auxiliary combustor 220 is configured to raise the temperature of the hydrogen fuel to the required injection temperature.

The auxiliary combustor comprises an auxiliary combustor fuel offtake 222 configured to divert a portion of the hydrogen fuel from the main fuel conduit 214.

Alternatively or (as in the current embodiment), additionally, the preheater comprises a recuperator 224. The recuperator 224 comprises a heat exchanger configured to exchange heat between engine exhaust gases downstream in main engine core flow of the turbines 208, 210, with hydrogen in the main fuel conduit 214. As such, the core exhaust gases are cooled, and hydrogen fuel within the conduit 214 is heated. Valves 226, 228 control flow from the pump 212 to each of the auxiliary combustor 220 and recuperator 224 as necessary.

A purging and priming system is also provided, which comprises a supply of one or more purging and priming gases, and one or more valves to control supply of those gases.

In the present embodiment, a purging gas comprising an inert gas such as nitrogen (as in the described embodiment) or helium is provided in a purge tank 230. A separate priming gas comprising gaseous or supercritical hydrogen is suppled in a priming tank 232. The priming tank 232 is separate to the main hydrogen fuel tank 104, to enable the priming tank 233 to store hydrogen at higher pressures and temperatures than the hydrogen in the main storage tank 104. Typically, the priming as tank 232 is smaller than the main storage tank 104, and does not require as much (or in some cases, any) insulation, as the hydrogen contained within the tank can be stored at ambient temperatures. Both the priming and purging gas tanks 230, 232 are connected to the main fuel conduit 214 at a junction between the liquid hydrogen tank 104 and the high-pressure liquid hydrogen fuel pump 212 via a purging valve 234, a priming valve 236 and a further control valve 238.

The purging gas tank typically comprises an external fill line (not shown) into which additional purging gas can be provided. The priming gas tank may also comprise an external fill line.

However, the priming gas tank 232 can also be filled by the hydrogen fuel system itself.

A gaseous hydrogen fuel offtake 238 is provided downstream in hydrogen fuel flow of the pump 212. In the present embodiment, the hydrogen fuel offtake 238 is provided downstream in hydrogen fuel flow of both the low-pressure and high-pressure pumps 218, 212, though in some cases the fuel offtake 238 may be downstream of the low-pressure fuel pump 218 only, or may be downstream of a single pump where only a single pump is present. In the present embodiment, the hydrogen fuel offtake 238 is located downstream in hydrogen fuel flow of both of the preheaters 220, 224, and upstream of the gas turbine engine combustor 206. As such, while the main conduit 214 provides fuel flow between the preheaters 220, 224 and combustor 206, a portion of hydrogen fuel flow can be diverted via the offtake 238. Typically, the offtake 238 is configured to receive gaseous, high-pressure hydrogen fuel from the conduit 214, which has been warmed from its storage temperature.

Flow through the offtake 238 is controlled by a fill valve 240, which can be selectively opened to allow hydrogen to be diverted through the offtake 238, or closed such that all flow continues through the main fuel conduit 214.

The offtake 238 is in fluid communication with the priming tank 232 via a fill port 240. As such, opening the fill valve 240 permits hydrogen to be diverted from the main fuel conduit 214 to the hydrogen priming tank 232. Consequently, the priming tank 232 can be refilled after operation without external equipment. Filling the priming tank 232 with warm hydrogen gas, rather than cryogenic hydrogen has several advantages. Firstly, the priming gas can be stored at ambient temperatures, without either heating or cooling significantly over time, without a requirement for insulation. As such, the pressure within the tank 232 remains relatively stable, ensuring adequate pressure is available ay any point for priming, while avoiding the risk of overpressure due to the stored hydrogen heating or boiling. Such a system thereby increases safety, simplifies operation, and reduces the need for venting, refilling and insulation of the tank 232, thereby reducing complexity.

The system can be operated in accordance with purging, priming, operation and refilling modes.

Purging is necessary to remove any air from the system, which would comprise oxygen and present a fire hazard if mixed with hydrogen. Additionally, any liquid water would freeze at the temperatures present in the fuel system.

During the purging step, valves 234 and 238 are opened to allow nitrogen to flow from the purging tank 230 into the fuel conduit 214 and through the pump 212, preheaters 224, 220 and various downstream components.

Once the system is purged, all valves are closed again to seal the system from ingress with air.

In a priming step, the system is then primed with relatively warm gaseous hydrogen from the priming tank 232 into the fuel conduit 214. Valves 234, 238 are opened, to permit the hydrogen to flow through each of the pump 212, preheaters 224, 220 and various downstream components, to remove the nitrogen purge gas from each of these systems, which would otherwise freeze on introduction of liquid hydrogen to the system.

Once the system is fully primed with gaseous hydrogen, the starting process can continue. The engine compressor 202 or 204 is cranked, or continues to be cranked, to generate sufficient compressed airflow and pressure for delivery of a required inlet pressure at the pre-heater 208 to support combustion. Liquid fuel is provided from the tank 104, pumped by the pump 212, heated by the preheater 220, 224 and delivered to the combustor 206 where it is combusted. The engine is now started.

During the priming process, the gaseous hydrogen priming tank 232 is depleted or partially depleted. Typically, the priming tank 232 is filled by compressed gaseous hydrogen under a pressure of between 10 Bar and 100 Bar. Lower pressures may not provide sufficient flow to enable complete disposal of any nitrogen gas in the system, while higher pressures may necessitate excessively heavy storage tanks. On the other hand, a higher storage pressure may be desirable, as more hydrogen can be stored in a smaller volume. As such, a maximum storage pressure of between 25 Bar and 75 is typical, and in one embodiment is approximately 50 Bar.

The pump 212 must operate during use to provide sufficient pressure and flow to provide the combustor 206 with the necessary fuel flow to maintain operation at maximum take-off power. Depending on the engine, this may necessitate a pump 212 delivery pressure of up to 100 bar.

As such, the pump 212 delivery pressure at maximum take-off conditions, and the maximum storage pressure for the hydrogen priming tank match well. Consequently, in a refilling procedure, the pump 212 may be maintained at a higher delivery pressure than required for the combustor 206 for a period after the engine is operated at maximum take-off power, for example during climb where the engine is operated at or close to maximum continuous power, such that excess fuel is available for diversion to the priming tank 232, at a pressure close to the maximum storage pressure of the tank 232. During this process, the fill valve 240 is opened to allow fuel to flow into the hydrogen priming tank 232 through the offtake 238. Once the tank 232 is sufficiently refilled, the fill valve 240 is closed, and the pump 212 returns to a delivery pressure determined by the required delivery pressure of the combustor 206.

As such, a fuel system and operating method are described, in which a gas turbine engine fuelled by liquid hydrogen can be primed, without requiring external equipment for refilling the tank after each flight.

Additional advantages include potential weight savings of removing the refill pipework and connections for refilling the hydrogen priming tank. Turnaround times may also be improved.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

Changes may be made to the disclosed embodiment without departing from the invention as defined by the claims. For example, either pre-heater may be eliminated, or replaced with a different type of preheater, such as an electrically powered resistance heater. Similarly, the gas turbine engine could be of a different form, and could comprise two or even three shafts, with associated compressors and turbines.

## Claims

1. A fuel system for a hydrogen fuelled gas turbine engine (103) comprising:
a main hydrogen fuel storage unit (104);
a hydrogen fuel pump (212) configured to be supplied with hydrogen from the main hydrogen storage unit (104);
a hydrogen fuel preheater (220, 224) configured to be supplied with high pressure hydrogen from the hydrogen fuel pump (212), and configured to supply heated gaseous hydrogen to a combustor (206) of the gas turbine engine;
a hydrogen priming tank (232), separate from the main hydrogen storage unit (104), configured to store compressed gaseous hydrogen and to deliver gaseous hydrogen to at least the hydrogen fuel pump (212) and preheater (220, 224); wherein
the fuel system comprises a high-pressure gaseous hydrogen fuel offtake (238) downstream in hydrogen fuel flow of the fuel pump (212) in fluid communication with the hydrogen priming tank (232), and configured to fill the hydrogen priming tank (232) with hydrogen.

2. A fuel system according to claim 1, wherein the fuel system comprises a hydrogen priming gas tank refill valve (240) configured to selectively open to allow filling of the hydrogen priming gas tank (232).

3. A fuel system according to claim 1 or claim 2, wherein the offtake (238) is provided downstream in hydrogen fuel flow of the preheater (220, 224).

4. A fuel system according to any of the preceding claims, wherein the pre-heater comprises an auxiliary combustor (220) configured to combust a portion of hydrogen fuel with air to produce a heated exhaust flow.

5. A fuel system according to any of the preceding claims, wherein the preheater comprises a recuperator (224) configured to exchange heat between gas turbine engine exhaust gases and hydrogen fuel.

6. A fuel system according to any of the preceding claims, wherein the hydrogen storage tank (104) is configured to store hydrogen at an above-ambient pressure, such as between 1 Bar and 4 Bar,

7. A fuel system according to any of the preceding claims, wherein the hydrogen storage tank (104) is configured to store liquid hydrogen.

8. A fuel system according to any of the preceding claims, wherein the hydrogen priming gas tank (232) is configured to store gaseous hydrogen at a maximum pressure of between 10 Bar and 100 Bar.

9. A method of operating a hydrogen fuelled gas turbine engine fuel system in accordance any of the preceding claims, comprising, during engine running, filling the hydrogen priming tank (232) with gaseous hydrogen from an offtake (238) downstream in hydrogen fuel flow of the hydrogen fuel pump (212).

10. An aircraft comprising the hydrogen fuel system of any of claims 1 to 8.
